# EUROPÄISCHE PATENTANMELDUNG

(11) **EP 2 589 491 A1**
(43) Veröffentlichungstag der Anmeldung: **08.05.2013**
(21) Anmeldenummer: 11008837.4
(22) Anmeldetag: 07.11.2011
(51) Int. Cl.: B32B 15/20, B32B 15/08, B32B 27/20, C09D 7/12

(54) **Verbundfolie mit einer metallischen Lage sowie Verfahren und Vorrichtung zu deren Herstellung**

(71) Anmelder: Veka AG, 48324 Sendenhorst (DE)
(72) Erfinder: Schmidt, Reinhard, Dr., 49088 Osnabrück (DE)
(74) Vertreter: von Hellfeld, Axel

(57) **Zusammenfassung**

Eine Verbundfolie (10) für Beschichtungen weist auf:
- eine erste Lage (14) aus einem thermoplastischen Kunststoff,
- eine zweite Lage (12) aus einem thermoplastischen Kunststoff größerer Weichheit als der thermoplastische Kunststoff der ersten Lage (14),
- eine metallische Lage (16) zwischen der ersten und der zweiten Lage,
- eine Decklage (18) mit einem Nanopartikel enthaltenden Lack, und
- eine Klebstofflage (20) unter der zweiten Lage (12).

Offenbart sind weiterhin ein Verfahren und eine Vorrichtung zum Herstellen einer solchen Verbundfolie.

## Beschreibung

Die Erfindung betrifft eine Verbundfolie für Beschichtungen.

Verwendung finden derartige Verbundfolien insbesondere zum Beschichten von Bauteilen aus Kunststoff, z.B. in der Möbelindustrie oder in der Bauindustrie. In letzterer sind insbesondere bedeutsam die Beschichtung von Profilen für Fenster und Türen.

Der Stand der Technik gemäß der DE 40 321 39 D2 kennt hierfür den Einsatz einer PVC-Folie, die dekorativ bedruckt wird und darüber einen Acrylfilm zur Verbesserung der Witterungsbeständigkeit aufweist.

Die EP 1 119 589 B1 beschreibt einen Schichtwerkstoff mit einem härtbaren Kunstharz auf der Basis von einem Acrylat-Polymere aufweisenden Substrat, wobei das Kunstharz lösungsmittelfrei und mittels polymerisierbarer Nanopartikel modifiziert ist.

Die EP 1 153 090 B1 beschreibt ein Verfahren zum Herstellen von strahlenhärtbaren Beschichtungen.

Bei Beschichtungen der hier in Rede stehenden Art kommt es insbesondere auf die folgenden Eigenschaften an und in dieser Hinsicht ist der Stand der Technik verbesserungsfähig:
Ein wesentliches Merkmal von Beschichtungen ist deren mechanische Beständigkeit, insbesondere die Abriebfestigkeit.

Eine weitere wichtige Eigenschaft ist die chemische Beständigkeit, d.h. insbesondere die Widerstandsfähigkeit gegen Beeinträchtigungen durch Lösungsmittel, wie z.B. Aceton, Benzin, oder Reinigungsmittel. Dabei soll die Verbundfolie auch eine hohe Gas- und Flüssigkeitsbarriere darstellen.

Des Weiteren soll eine Verbundfolie unter verschiedenen Bedingungen ein stabiles Laminat bilden, d.h. einer sog. Delamination widerstehen.

Auch soll eine Verbundfolie geeignet sein, einfach und formtreu auf Profile mit relativ komplizierter Geometrie aufgebracht zu werden. Die Ummantelung eines Profils mit der Verbundfolie soll in einfacher Weise und insbesondere mit geringem apparativen Aufwand möglich sein.

Eine weitere wünschenswerte Eigenschaft von Verbundfolien ist es, nach der Beschichtung eines Profils eine sehr glatte Oberfläche zu ergeben, also insbesondere zuvor in der Profiloberfläche vorhandene Unebenheiten auszugleichen.

Auch soll eine Verbundfolie eine hohe Lichtechtheit aufweisen und eine hohe optische Witterungsbeständigkeit, also ihre optischen Eigenschaften auch unter lang einwirkenden Witterungseinflüssen nicht wesentlich ändern. Dies betrifft insbesondere die Einwirkung von UV-Strahlung.

Weiterhin soll eine Verbundfolie möglichst temperaturbeständig sein.

Auch soll die Möglichkeit gegeben sein, eine metallische Lage in einfacher Weise und geschützt in die Verbundfolie einzubringen.

Die Erfindung hat das Ziel, eine Verbundfolie bereitzustellen, die zumindest hinsichtlich einiger der oben genannten Eigenschaften gegenüber dem Stand der Technik verbessert ist und mit der besondere ästhetische Effekte erzielbar sind.

Hierzu lehrt die Erfindung eine Verbundfolie für Beschichtungen, aufweisend eine erste Lage aus einem thermoplastischen Kunststoff, eine zweite Lage aus einem thermoplastischen Kunststoff größerer Weichheit als der thermoplastische Kunststoff der ersten Lage, eine metallische Lage zwischen der ersten und der zweiten Lage, und eine Decklage mit einem Nanopartikel enthaltenden Lack.

Eine derartige Verbundfolie ist geeignet, auf ein Profil, wie ein Tür- oder Fensterprofil (Rahmen), als Beschichtung aufgebracht zu werden, insbesondere in Form einer Ummantelung des Profils.

Wenn hier auf bestimmte Lagen und deren Reihenfolge Bezug genommen wird, ist dies nicht einschränkend dahingehend zu verstehen, dass diese Angabe von Lagen abschließend ist, d.h. es ist möglich und vorgesehen, dass weitere Lagen zwischen den angegebenen Lagen angeordnet sind oder weitere Lagen unten oder oben auf der Verbundfolie zugesetzt werden. Die Begriffe "unten" und "oben" beziehen sich hier auf den vorgesehenen Einsatz der Verbundfolie als Beschichtung derart, dass "unten" sich auf diejenige Lage der Verbundfolie bezieht, die dem zu beschichtenden Substrat (z. B. einem Profil) am nächsten liegt, und "oben" somit sich auf diejenige Lage(n) bezieht, die in der Verbundfolie vom Substrat (Profil) abgekehrt sind.

So ist gemäß einer bevorzugten Ausgestaltung vorgesehen, dass die vorstehend beschriebene Verbundfolie unten mit einer Klebstofflage versehen ist.

Besonders bevorzugt sind die erste Lage aus thermoplastischem Kunststoff und die zweite Lage aus thermoplastischen Kunststoff jeweils aus PVC (Polyvinylchlorid) hergestellt.

Die untere (zweite) Lage aus zum Beispiel PVC ermöglicht aufgrund ihrer größeren Weichheit eine gute Anpassung und einen guten Ausgleich von gegebenenfalls vorhandenen Unebenheiten auf der Oberfläche des zu beschichtenden Profils. Beim Andrücken der Verbundfolie an das Profil werden solche Unebenheiten durch die Weichheit der zweiten Lage ausgeglichen, so dass die äußere Oberfläche des mit der Verbundfolie beschichteten Profils relativ glatt ist.

Die erste Lage aus thermoplastischem Kunststoff, zum Beispiel PVC, ist demgegenüber härter, weist also eine deutlich geringere Konzentration an Weichmachern, wenn überhaupt, auf.

Für die zweite Lage aus thermoplastischem Kunststoff, der eine größere Weichheit hat als der thermoplastische Kunststoff der ersten Lage, wird bevorzugt ein hochmolekularer Weichmacher eingesetzt. Dies ergibt eine hohe Temperaturstabilität.

Bei Verwendung von PVC für die erste und die zweite Lage ergibt sich eine sehr gute Verschweißbarkeit der Lagen und damit ein hoher Widerstand gegen eine Delamination.

Für die Nanopartikel enthaltende Decklage wird ein durch Strahlung (UV- oder Elektronenstrahl) härtbarer Lack vorgesehen.

Bevorzugt wird die Decklage physikalisch mattiert, also die Oberfläche insbesondere hinsichtlich ihrer Haptik und ihrer optischen Eigenschaften modifiziert. Hierfür geeignet ist insbesondere elektromagnetische Strahlung im UW-Bereich, insbesondere etwa mit Wellenlängen im Bereich um 172 Nanometer in einem Inertgas (z. B. N₂). Durch eine Bestrahlung im genannten UV-Bereich in einer Inertgasatmosphäre verringert sich der Anteil an Rest-Doppelbindungen und damit ergibt sich eine hohe Vernetzung im Lack. Es werden damit weniger UV-Initiatoren benötigt, nämlich weniger als ein Prozent, und daraus ergibt sich eine stark reduzierte Vergilbungsgefahr. Eine derart behandelte Decklage zeichnet sich somit aus durch eine ganz geringe Alterung und eine hohe Lichtechtheit mit der Zeit.

Bevorzugt werden für die Decklage Nanopartikel mit Abmessungen < 100 nm verwendet, was die optischen Eigenschaften der Decklage und insbesondere ihre Transparenz verbessert. Eine andere Ausgestaltung der Erfindung sieht vor, dass die Decklage ohne Verwendung von Blaupigmenten eingefärbt ist. Einzelheiten einer solchen Färbung als solcher sind der DE 44 32 724 C2 zu entnehmen.

Bei einer solchen Einfärbung der Decklage bekommt diese einen transparenten Farbschimmer und, je nach verwendeter metallischer Lage können sehr unterschiedliche ästhetische Effekte erzielt werden. Insbesondere ist es möglich, bei Verwendung ein und derselben metallischen Lage durch Einsatz unterschiedlicher Einfärbungen der Decklage ganz verschiedene optische Eindrücke zu erzielen.

Bevorzugt befindet sich in der Verbundfolie unter der ersten Lage aus thermoplastischem Kunststoff, insbesondere PVC, eine metallische Lage in Form einer Aluminiumfolie mit einer Stärke von bevorzugt 9 bis 12 µm.

Weiterhin erhält bevorzugt die obere PVC-Lage eine leichte Prägung, d.h. eine leichte mechanische Strukturierung, z. B. in der Art einer Holzoberfläche. Zusätzlich oder alternativ kann die Oberfläche der relativ harten PVC-Lage bedruckt werden, bevorzugt mit einer sogenannten Bürstenstruktur. Eine Bedruckung mit einer Bürstenstruktur erzeugt im Zusammenwirken mit der metallischen Lage den optischen Eindruck von gebürstetem Metall.

Eine weitere bevorzugte Ausgestaltung sieht vor, dass die Nanopartikel enthaltende Decklage mit Farbstoff eingefärbt wird, insbesondere mit 1 bis 10 Gew.-% eines lichtbeständigen Farbstoffes. Damit bleibt die Decklage im Wesentlichen optisch transparent und mit der genannten Einfärbung können im Zusammenwirken mit der metallischen Lage ästhetische Effekte erzielt werden, die den Eindruck, je nach der Art der Färbung, unterschiedlicher Eloxierfarben erzeugen.

Die Erfindung lehrt auch ein Verfahren zum Herstellen einer Verbundfolie, insbesondere mit den vorstehend genannten Eigenschaften, gemäß folgenden Schritten:
- Bereitstellen einer ersten Teil-Verbundfolie aufweisend eine erste Lage aus einem thermoplastischen Kunststoff, eine Decklage aus Nanopartikel enthaltendem Lack, und gegebenenfalls eine metallische Lage,
- Bereitstellen einer zweiten Teil-Verbundfolie aufweisend eine zweite Lage aus einem thermoplastischen Kunststoff größerer Weichheit als der thermoplastische Kunststoff der ersten Lage, und gegebenenfalls
- mit einer Grundfärbung,
- Bereitstellen eines einen Klebstoff aufweisenden Films, und
- gemeinsames Laminiern der ersten Teil-Verbundfolie, der zweiten Teil-Verbundfolie und des Kunststoff aufweisenden Films zwischen zwei Walzen zu der Verbundfolie.

Dabei kommt es bei den drei vorstehend genannten Schritten des "Bereitsstellens" nicht auf deren Reihenfolge an.

Die Erfindung betrifft auch eine Vorrichtung zum Herstellen einer Verbundfolie mit den oben genannten Eigenschaften mit
- einer ersten Rolle zur Aufnahme einer ersten Teil-Verbundfolie aufweisend eine erste Lage aus einem thermoplastischen Kunststoff, eine Decklage aus Nanopartikel enthaltendem Lack, und eine metallische Lage,
- einer zweiten Rolle zur Aufnahme einer zweiten Teil-Verbundfolie, aufweisend eine zweite Lage aus einem thermoplastischen Kunststoff größerer Weichheit als der thermoplastische Kunststoff der ersten Lage, gegebenenfalls mit einer Grundfärbung,
- einer dritten Rolle zur Aufnahme eines einen Klebstoff aufweisenden Films, und
- zwei Walzen, zwischen die die erste Teil-Verbundfolie, die zweite Teil-Verbundfolie und der Klebstoff aufweisende Film zur gemeinsamen Laminierung geführt werden, wobei
- die an der ersten Teil-Verbundfolie anliegende Walze heizbar ist.

Bevorzugt ist die an dem Klebstoff-Film anliegende Walze kühlbar.

Nachfolgend wir die Erfindung anhand von Ausführungsbeispielen näher beschrieben. Es zeigt:
Fig. 1 schematisch einen Schnitt durch eine Verbundfolie, und
Fig. 2 schematisch eine Vorrichtung zum Herstellen einer Verbundfolie.

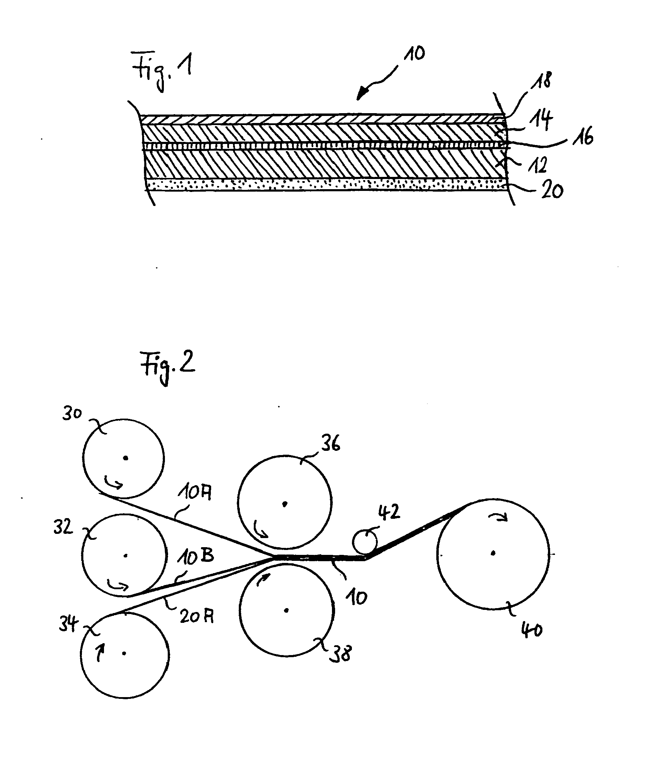

Die Verbundfolie 10 gemäß Fig. 1 hat eine erste Lage 14 aus einem thermoplastischen Kunststoff und eine zweite Lage 12 ebenfalls aus einem thermoplastischen Kunststoff. Beim gezeigten Ausführungsbeispiel wird für den thermoplastischen Kunststoff PVC (Polyvinylchlorid) eingesetzt.

Unter die erste Lage 14 auf PVC wird eine metallische Lage 16 aus Aluminium laminiert. Die Aluminiumlage (Folie) hat eine Stärke im Bereich von 9 bis 12 µm. Die metallische Lage 16 kann, je nach dem gewünschten Dekoreffekt, eingefärbt werden.

Über der ersten Lage 14 ist eine Decklage 18 aus einem Nanopartikel enthaltenden Lack aufgebracht.

Unter der zweiten Lage 12 befindet sich eine Klebstofflage 20.

Zur Decklage aus Nanopartikel enthaltendem Lack:
Die Decklage hat bevorzugt eine Stärke im Bereich von 3 bis 15 µm. Sie wird aus einem strahlungshärtbarem Lack gebildet, in den Nanopartikel eingebettet sind. Die Nanopartikel haben Abmessungen kleiner 100 nm. Damit bleibt die Transparenz des Lackes im Wesentlichen erhalten. Ausführungsbeispiele für einen verwendbaren Lack finden sich zum Beispiel in der EP 1 119 589 B1 oder EP 1 153 090 B1. Die Nanopartikel bestehen zum Beispiel aus SiO₂. Die Nanopartikel bewirken insbesondere eine starke Verbesserung der mechanischen Eigenschaften der Decklage, insbesondere eine Verbesserung der Abrieb- und Kratzfestigkeit. Auch die chemische Beständigkeit der Decklage wird durch die Nanopartikel stark verbessert, da sog. "freie Volumina" durch die Nanopartikel beseitigt werden. Auch die Temperaturbeständigkeit der Decklage wird durch die Nanopartikel erhöht.

Durch Zusatz von geeigneten Additiven, zum Beispiel Hydroxyphenyltriazine, wird eine UV-Filterung im Lack bewirkt.

Der Lack ist thermisch verformbar und damit kann ihm zum Beispiel eine gewünschte Struktur eingeprägt werden.

Es ist als solches bekannt, durch Füllung vernetzbarer organischer Bindemittel oder Reaktivverdünner, wie zum Beispiel Acrylat-Oligomere und -monomere mit SiO₂-Nanopartikeln die Kratzfest- und Abriebeigenschaften von Beschichtungen wesentlich zu verbessern. Bevorzugt wird hier von pyrogenen Kieselsäurepartikeln als anorganische Komponente ausgegangen. Es wurde gefunden, dass man eine Deagglomeration der mikroskaligen Kieselsäuren dann erreicht, wenn man die Oberflächenbehandlung mit Organosilanen in einem inerten "Lösemittel", wie z. B. flüssigen Acrylaten, durchführt und die so enstehenden silanisierten Partikel in der Lösung belässt. Der Aufbau einer Polysiloxanhülle um die Kieselsäurepartikel erleichtert offenbar den Zerfall der mikroskaligen Agglomerate bis auf die nanoskaligen Aggregate, die bereits durch den Herstellungsprozess aus Primärteilchen erzeugt wurden.

Eine Acrylat-Lösung, die vollständig deagglomerierte Siliziumdioxid-Partikel mit Durchmessern < 100 nm als Füllstoff enthält, weist vorteilhafte physikalische und anwendungstechnische Eigenschaften auf. Da die Nanopartikel keine räumlichen Strukturen ausbilden und ihre Wechselwirkung mit dem Lösemittel durch die Polysiloxanhülle in ihrer Oberfläche stark eingeschränkt werden kann, wird die Rheologie der Lösung, insbesondere deren Viskosität unter Scherung, nur wenig beeinflusst. Die Lichstreuung an Teilchen in Lösungen ist dann zu vernachlässigen, wenn die Teilchen die oben angegebene kritische Größe unterschreiten und die Brechungsindizes von Flüssigkeit und Teilchen sich möglichst wenig unterscheiden. Die durch Strahlenhärtung erzeugten Polyacrylat-Nanokomposite bilden Netzwerke mit erhöhter Netzwerkdichte. Freie Volumina der Polyacrylatmatrix werden durch die eingebundenen Nanopartikel "aufgefüllt".

Insgesamt ergibt sich so eine Nano-Decklage mit den eingangs geschilderten vorteilhaften Eigenschaften.

Zur ersten Lage aus thermoplastischem Kunststoff:
Die erste Lage 14 hat eine Stärke von zum Beispiel 50 bis 100 µm. Verwendet wird hierfür ein Hart-PVC. Die Hart-PVC-Lage ist zum Beispiel UV-stabilisiert. Sie ist transparent. Die Unterseite der ersten Lage 14 kann zum Beispiel so texturiert werden, dass sie leicht bedruckbar ist.

Zur metallischen Lage:
Die metallische Lage 16 gibt der Verbundfolie im Wesentlichen ihr optisches und ästhetisches Erscheinungsbild. Die metallische Lage aus Aluminium hat typischerweise eine Stärke von 9 bis 12 µm. Der optisch-ästhetische Eindruck entsteht im Wesentlichen im Zusammenwirken mit der darüber liegenden ersten Lage 14 aus härterem PVC und der darüber liegenden Nanopartikel enthaltenden Decklage.

So kann die erste Lage 14 aus thermoplastischem Kunststoff entweder auf einer ihrer Oberflächen eine leichte Prägung im Sinne einer mechanischen Strukturbeeinflussung erhalten, z. B. wie eine Holzoberfläche.

Alternativ oder zusätzlich kann die erste Lage 14 aus thermoplastischem Kunststoff bedruckt werden, z. B. mit einem Bild, das etwa einer sogenannten Bürstenstruktur entspricht. Wird die PVC-Lage 14 so mit einer bürstenartigen Abbildung bedruckt, dann entsteht im Zusammenwirken mit der darunter liegenden metallischen Lage 16 insgesamt für den Betrachter von oben ein Eindruck wie bei einem gebürsteten Metall, wofür typischerweise Aluminium vorgesehen ist. Die genannte mechanische Prägung der Oberfläche kann zusätzlich zu der beschriebenen Bedruckung der PVC-Lage 14 erfolgen.

Zur zweiten Lage aus thermoplastischem Kunststoff:
Die zweite Lage 12 besteht beim Ausführungsbeispiel auch aus PVC und hat bevorzugt eine Stärke im Bereich von 100 bis 150 µm. Die Weichheit der zweiten Lage 12 wird durch Zusatz eines hochmolekularen Weichmachers im Bereich von 20 bis 30 Gew.-% erreicht.

Gegebenfalls kann der zweiten Lage 12 eine sog. Fondfarbe zugesetzt werden, insbesondere eine PVC-Farbe der oben beschriebenen Art mit Klebewirkung zur Erreichung einer besseren Haftung der Lagen aneinander. Entsprechendes gilt für die oben genannte Metallische Lage 16.

Zur Klebstofflage:
Die Klebstofflage 20 besteht beim dargestellten Ausführungsbeispiel aus einem Polyurethan (PPU) und hat eine Stärke im Bereich von 20 bis 40 µm. Die Lage (Folie) ist als Film extrudierbar mit einer PE-Folie als Stützschicht. Diese PE-Stütz-Folie kann abgezogen werden, so dass bei der fertigen Verbundfolie 10 gemäß Fig. 1 die Klebstofflage 20 freiliegt.

Fig. 2 zeigt eine Vorrichtung zum Herstellen einer Verbundfolie (Laminat) der vorstehend anhand der Fig. 1 beschriebenen Art.

Die Vorrichtung weist eine erste Rolle 30 auf, auf die eine erste Teil-Verbundfolie 10A aufgewickelt ist. Diese Teil-Verbundfolie 10A weist die erste Lage 14 aus einem thermoplastischen Kunststoff und die Decklage 18 aus Nanopartikel enthaltendem Lack auf. Falls eine metallische Lage 16 vorgesehen ist, ist diese ebenfalls Teil der Teil-Verbundfolie 10A.

Auf einer zweiten Rolle 32 befindet sich eine zweite Teil-Verbundfolie 10B, aufweisend die zweite Lage 12 aus thermoplastischem Kunststoff der oben beschriebenen Art. Gegebenenfalls kann wie oben die zweite Lage 12 mit einer Grundfärbung versehen sein.

Auf einer dritten Rolle 34 befindet sich ein Film 20A, der mit einem Klebstoff beschichtet ist.

Der Klebstoff aufweisende Film 20A besteht aus einer Schutzfolie, zum Beispiel aus Polyethylen, die den Klebstoff trägt und zur Vermeidung eines unerwünschten Anhaftens abdeckt.

Zwischen zwei Walzen 36, 38 werden die genannten Teil-Verbundfolien und der Klebstoff aufweisende Film 20A gleichzeitig zu einem Laminat (Verbundfolie) verbunden.

Zum Laminieren werden die beiden Walzen 36, 38 in Richtung zueinander gedrückt, typischerweise, je nach der Verbundfolie, mit Drucken im Bereich von 1 bis 3 bar. Die Rollen und Walzen drehen jeweils in der mit Pfeilen angegebenen Richtung.

Die Walze 36 wird beheizt im Temperaturbereich zwischen 140 und 220 °C, insbesondere im Bereich zwischen 150 und 200 °C, je nach der Durchlaufgeschwindigkeit des Laminats.

Die Walze 38 wird gekühlt auf typischerweise Temperaturen im Bereich von 1 bis 10 °C, insbesondere im Bereich von 2 bis 6 °C, je nach Durchlaufgeschwindigkeit und Typ des Laminats.

Über eine Umlenkrolle 42 wird das fertige Laminat auf eine Rolle 40 gewickelt. Die Laminierungsgeschwindigkeit liegt typischerweise im Bereich von 10 bis 50 m/min.

## Patentansprüche

1. Verbundfolie (10) für Beschichtungen, aufweisend
- eine erste Lage (14) aus einem thermoplastischen Kunststoff,
- eine zweite Lage (12) aus einem thermoplastischen Kunststoff größerer Weichheit als der thermoplastische Kunststoff der ersten Lage (14),
- eine metallische Lage (16) zwischen der ersten und der zweiten Lage, und
- eine Decklage (18) mit einem Nanopartikel enthaltenden Lack.

2. Verbundfolie nach Anspruch 1 mit einer Klebstofflage (20) unter der zweiten Lage (12).

3. Verbundfolie nach einem der Ansprüche 1 oder 2 **dadurch gekennzeichnet, dass** die erste und die zweite Lage (14, 12) PVC aufweisen.

4. Verbundfolie nach einem der vorhergehenden Ansprüche **dadurch gekennzeichnet, dass** die zweite Lage einen hochmolekularen Weichmacher enthält.

5. Verbundfolie nach einem der vorhergehenden Ansprüche **dadurch gekennzeichnet, dass** die zweite Lage (12) 15 bis 30 Gew.-% Weichmacher enthält.

6. Verbundfolie nach einem der vorhergehenden Ansprüche **dadurch gekennzeichnet, dass** die zweite Lage (12) eine Stärke im Bereich von 70 bis 200 µm, insbesondere im Bereich von 100 bis 150 µm hat.

7. Verbundfolie nach einem der vorhergehenden Ansprüche **dadurch gekennzeichnet, dass** die erste Lage (14) eine Stärke im Bereich von 30 bis 150 µm, insbesondere 50 bis 100 µm hat.

8. Verbundfolie nach einem der vorhergehenden Ansprüche **dadurch gekennzeichnet, dass** die metallische Lage (16) eine Stärke im Bereich von 5 bis 20 µm, insbesondere im Bereich von 9 bis 12 µm hat.

9. Verbundfolie nach einem der vorhergehenden Ansprüche, **dadurch gekennzeichnet, dass** die Decklage (18) eine Stärke im Bereich von 2 bis 20 µm, insbesondere im Bereich von 3 bis 15 µm hat.

10. Verbundfolie nach einem der vorhergehenden Ansprüche, **dadurch gekennzeichnet, dass** die metallische Lage (16) Aluminium aufweist.

11. Verbundfolie nach einem der vorhergehenden Ansprüche **dadurch gekennzeichnet, dass** die Decklage (18) Nanopartikel mit Abmessungen kleiner 100 Nanometer aufweist.

12. Verbundfolie nach einem der vorhergehenden Ansprüche **dadurch gekennzeichnet, dass** der Lack der Decklage (18) strahlungsgehärtet ist.

13. Verbundfolie nach einem der vorhergehenden Ansprüche **dadurch gekennzeichnet, dass** die Decklage (18) ohne Blaupigmente eingefärbt ist.

14. Verfahren zum Herstellen einer Verbundfolie (10) gemäß einem der Ansprüche 1 bis 13 mit folgenden Schritten:
- Bereitstellen einer ersten Teil-Verbundfolie (10A) aufweisend eine erste Lage (14) aus einem thermoplastischen Kunststoff, eine Decklage (18) aus Nanopartikel enthaltendem Lack, und eine metallische Lage (16),
- Bereitstellen einer zweiten Teil-Verbundfolie (10B) aufweisend eine zweite Lage (12) aus einem thermoplastischen Kunststoff größerer Weichheit als der thermoplastische Kunststoff der ersten Lage (14), und gegebenenfalls eine Grundfärbung,
- Bereitstellen eines einen Klebstoff aufweisenden Films (20A), und
- gemeinsames Laminieren der ersten Teil-Verbundfolie (10A), der zweiten Teil-Verbundfolie (10B) und des Kunststoff aufweisenden Films (20A) zwischen zwei Walzen (A, B) zu der Verbundfolie (10).

15. Vorrichtung zum Herstellen einer Verbundfolie (10) gemäß einem der Ansprüche 1 bis 13, mit
- einer ersten Rolle (30) zur Aufnahme einer ersten Teil-Verbundfolie (10A) aufweisend eine erste Lage (14) aus einem thermoplastischen Kunststoff, eine Decklage (18) aus Nanopartikel enthaltendem Lack, und eine metallische Lage (16),
- eine zweite Rolle (32) zur Aufnahme einer zweiten Teil-Verbundfolie (10B), aufweisend eine zweite Lage (12) aus einem thermoplastischen Kunststoff größerer Weichheit als der thermoplastische Kunststoff der ersten Lage (14), und gegebenenfalls eine Grundfärbung,
- eine dritte Rolle (34) zur Aufnahme eines einen Klebstoff aufweisenden Films (20A), und
- zwei Walzen (36, 38), zwischen die die erste Teil-Verbundfolie (10A), die zweite Teil-Verbundfolie (10B) und der Klebstoff aufweisende Film (20A) zur gemeinsamen Laminierung geführt werden, wobei
- die an der ersten Teil-Verbundfolie (10A) anliegende Walze (36) heizbar ist.

16. Vorrichtung nach Anspruch 15 **dadurch gekennzeichnet, dass** die an dem Klebstoff aufweisenden Film (20A) anliegende Walze (38) kühlbar ist.

17. Bauelement, insbesondere ein Profil für Fenster oder Türen, mit einer Beschichtung aus einer Verbundfolie gemäß einem der Ansprüche 1 bis 13.
